# EUROPÄISCHE PATENTSCHRIFT

(11) **EP 2 122 423 B1**
(45) Veröffentlichungstag und Bekanntmachung des Hinweises auf die Patenterteilung: **06.10.2010**
(21) Anmeldenummer: 08701299.3
(22) Anmeldetag: 08.01.2008
(51) Int. Cl.: G05B 19/402, B60J 7/057

(54) **ELEKTROMOTORISCHER ANTRIEB FÜR EIN KRAFTFAHRZEUG-STELLTEIL SOWIE ANSTEUERVERFAHREN**
ELECTROMOTIVE DRIVE FOR A MOTOR VEHICLE ACTUATING PART AND DRIVE METHOD
ENTRAÎNEMENT À MOTEUR ÉLECTRIQUE POUR UN ÉLÉMENT D'ACTIONNEMENT DE VÉHICULE AUTOMOBILE, ET PROCÉDÉ D'ASSERVISSEMENT

(30) Priorität: 21.02.2007 DE 102007008384
(43) Veröffentlichungstag der Anmeldung: 25.11.2009
(73) Patentinhaber: Robert Bosch GmbH, 70442 Stuttgart (DE)
(72) Erfinder: FREY, Heiko, 76476 Bischweier (DE); LAMM, Hubert, 77876 Kappelrodeck (DE); STOLZ, Christian, 77815 Buehl (DE)
(86) Internationale Anmeldenummer: PCT/EP2008/050125
(87) Internationale Veröffentlichungsnummer: WO 2008/101744

(56) Entgegenhaltungen:
- EP-A- 0 878 338
- US-A1- 2005 212 473

## Beschreibung

### Stand der Technik

Die Erfindung betrifft einen elektromotorischen Antrieb gemäß dem Oberbegriff des Anspruchs 1 sowie ein Verfahren zum Ansteuern eines elektromotorischen Antriebs für ein Kraftfahrzeug-Stellteil gemäß dem Oberbegriff des Anspruchs 11.

Aus der EP 0 878 338 B1 ist ein elektromotorischer Antrieb für ein Stellteil eines Kraftfahrzeugs bekannt, wobei das Stellteil mittels des elektromotorischen Antriebs in eine definierte Zielposition verstellbar ist. Um die Zielposition herum ist ein Toleranzbereich definiert, wobei sowohl die Zielposition als auch die obere und die untere Grenze des Toleranzbereichs als feste absolute Größen in einem Speicher einer signalverarbeitenden Anordnung des elektromotorischen Antriebs abgelegt sind. Wenn sich das Stellteil in dem festgelegten Toleranzbereich befindet steuert der Antrieb das Stellteil solange selbsttätig an, bis das Stellteil die Zielposition erreicht hat. Da das Anfahren der definierten Zielposition, insbesondere dann, wenn es sich bei dem Stellteil um ein Schiebedachteil handelt, aufgrund von äußeren mechanischen Einflüssen stark toleranzbehaftet ist, kann die definierte Zielposition in der Praxis nicht mit Sicherheit erreicht werden. Vielmehr wird von dem Stellteil in einem Großteil der Fälle eine Anhalteposition erreicht, die von der festgelegten Zielposition abweicht.

Soll der beschriebene elektromotorische Antrieb für eine Steuerungsaufgabe eingesetzt werden, bei der eine auslösende Bedingung darin besteht, dass sich das Stellglied nicht mehr im Toleranzbereich befindet, kommt es vor, dass in einigen Ansteuerfällen die Auslösebedingung schneller erfüllt ist, als in anderen Ansteuerfällen, da die tatsächliche Anhalteposition variiert und von der definierten, d. h. vorgegebenen Zielposition abweicht und sich manchmal sogar im Randbereich des Toleranzbereichs befindet. Befindet sich die Anhalteposition in einem Randbereich, also nahe eines festen oberen oder unteren Grenzwertes des Toleranzbereichs, reichen bereits zeitlich kurze und/oder intensitätsschwache mechanische äußere Einflüsse aus, um das Stellglied aus dem Toleranzbereich heraus zu bewegen, wodurch die Auslösebedingung schneller erfüllt wird, als wenn sich die Anhalteposition in unmittelbarer Nähe der Zielposition befindet.

### Offenbarung der Erfindung

### Technische Aufgabe

Der Erfindung liegt daher die Aufgabe zugrunde, einen elektromotorischen Antrieb sowie ein Ansteuerverfahren vorzuschlagen, mit denen sichergestellt wird, dass die Voraussetzungen zum Erfüllen der Auslösebedingung immer gleich sind, unabhängig davon, wie groß die Abweichung der tatsächlichen Anhalteposition von der Zielposition ist.

### Technische Lösung

Diese Aufgabe wird hinsichtlich des elektromotorischen Antriebs mit den Merkmalen des Anspruchs 1 und hinsichtlich des Ansteuerverfahrens mit den Merkmalen des Anspruches 11 gelöst.

Vorteilhafte Weiterbildungen der Erfindung sind in den Unteransprüchen angegeben. In den Rahmen der Erfindung fallen auch sämtliche Kombinationen aus zumindest zwei von der in der Beschreibung, den Ansprüchen und/oder den Figuren angegebenen Merkmalen.

Der Erfindung liegt der Gedanke zugrunde, keine festen absoluten Grenzen für den Toleranzbereich (Toleranzfeld) vorzusehen und diese in einem Speicher des elektromotorischen Antriebs abzulegen, sondern den Toleranzbereich in Abhängigkeit der Anhalteposition, d.h. der tatsächlichen Ist-Position nach dem Verstellvorgang des Kraftfahrzeug-Stellteils festzulegen bzw. zu berechnen. Die bevorzugt mittels der Detektionseinrichtung ermittelte Anhalteposition bildet somit die Basis zur Berechnung des Toleranzbereichs nach dem Verstellvorgang. Auf diese Weise wird sichergestellt, dass der Abstand des Stellgliedes von dem oberen und dem unteren Grenzwert des Toleranzbereichs immer gleich ist, unabhängig davon, wie weit die Anhalteposition von der vordefinierten, insbesondere in einem Speicher abgelegten Zielposition abweicht.

In Weiterbildung der Erfindung ist mit Vorteil vorgesehen, dass der elektromotorische Antrieb, insbesondere eine signalverarbeitende Anordnung des Antriebs derart ausgebildet, dass kein erneutes Verstellen des Kraftfahrzeug-Stellteils in die Zielposition erfolgt, selbst wenn eine Bedienperson, insbesondere mittels eines Steuerschalters eine entsprechende Vorgabe gibt, solange von der Detektionseinrichtung erkannt wird, dass sich das Kraftfahrzeug-Stellteil im Toleranzbereich befindet. Insbesondere für eine derartige Steueraufgabe ist der elektromotorische Antrieb bzw. das Ansteuerverfahren von entscheidendem Vorteil, da aufgrund der Abhängigkeit der absoluten Grenzen des Toleranzbereichs von der tatsächlichen Anhalteposition eine für die Bedienperson störende, sehr kurze Verstellung des Kraftfahrzeug-Stellteils innerhalb des Toleranzbereichs vermieden wird.

In Ausgestaltung der Erfindung wird die Zielposition nur erneut wieder angefahren, wenn sich das Kraftfahrzeug-Stellteil, insbesondere aufgrund äußerer Einflüsse, wie Schwingungen, etc., aus dem Toleranzbereich heraus bewegt hat und dort verbessert. Dabei kann das Verstellen des Kraftfahrzeug-Stellteils nach dem Verlassen des Toleranzbereichs gemäß einer ersten Alternative automatisch erfolgen, also unmittelbar nach dem Erkennen des Verlassens des Toleranzbereichs oder gemäß einer zweiten Alternative nur bei einer entsprechenden Vorgabe einer Bedienperson. Verlässt das Kraftfahrzeug-Stellglied, insbesondere ein Fahrzeugdach den Toleranzbereich, so wird bei der zweiten Alternative bei einem (erneuten) Verstellkommando auf die definierte Zielposition (erneut) die Zielposition angefahren. Erfolgt dagegen ein Verstellkommando auf die Zielposition während sich das Kraftfahrzeug-Stellglied innerhalb des Toleranzbereichs befindet, so erfolgt bevorzugt kein erneutes Anfahren der Zielposition, da sich das Dach innerhalb des Toleranzbereichs und damit ausreichend nah an der Zielposition befindet, wodurch eine für die Bedienperson störende, sehr kurze Verstellbewegung des Kraftfahrzeug-Stellgliedes vermieden wird.

Von besonderem Vorteil ist es, wenn das Toleranzfeld parametrierbar, also für unterschiedliche Zielpositionen oder unterschiedliche Anwendungsfälle unterschiedliche (relativ) Toleranzgrenzen festlegbar, insbesondere in einem Speicher des elektromotorischen Antriebs ablegbar sind.

In Weiterbildung der Erfindung ist mit Vorteil vorgesehen, dass die Detektionseinrichtung einen Drehsensor umfasst, welcher bevorzugt mit der Ankerwelle des Elektromotors zusammenwirkt. Die Detektionseinrichtung ist dabei bevorzugt Teil einer signalverarbeitenden Anordnung. Von Vorteil ist eine Ausführungsform, bei der mindestens ein Magnetfeldsensor, insbesondere ein Hall-Sensor und mindestens ein Magnetring mit einer magnetischen Teilung relativ zueinander verdrehbar angeordnet sind. Bevorzugt ist dabei der Magnetring drehfest mit der Ankerwelle eines Elektromotors des Antriebs verbunden und wirkt mit insbesondere zwei Hall-Sensoren zur Detektion der Ist-Position und gegebenenfalls zur Detektion der Verstellrichtung zusammen. Die von der Detektionseinrichtung ermittelte, tatsächliche Anhalteposition wird dann als Basis zur Bestimmung der absoluten Toleranzbereichsgrenzen herangezogen.

Insbesondere bei verstellbaren Fahrzeugdachteilen ist es üblich, für eine Soll-Dachposition zwei Zielpositionen vorzusehen, die abhängig davon von dem verstellbaren Dachteil angefahren werden, aus welcher Richtung sich das Dachteil der Soll-Position nähert (Öffnen oder Schließen). Würde man diese voneinander abweichenden Zielpositionen als Basis für den Toleranzbereich heranziehen, bzw. den Toleranzbereich so festlegen, dass er beide Zielpositionen zwingend umfasst, wäre der Toleranzbereich, also der Bereich, in dem die Soll-Position als erreicht gilt, sehr groß. Dadurch, dass als Basis zur Bestimmung des Toleranzbereiches nicht die Zielpositionen, sondern die tatsächliche Anhalteposition herangezogen wird, hat der Toleranzbereich auch dann eine optimale Größe, wenn für eine Soll-Position zwei voneinander beabstandete Zielpositionen voreingestellt, d.h. definiert sind.

In Weiterbildung der Erfindung ist mit Vorteil vorgesehen, dass es sich bei dem Kraftfahrzeug-Stellteil um ein zwischen zwei Endpositionen verstellbares Stellteil handelt. Bevorzugt wird dabei die Zielposition bzw. mindestens eine der Zielpositionen von einer Endposition gebildet.

Der elektromotorische Antrieb eignet sich insbesondere zum Verstellen eines als ein Fahrzeugdachteil ausgebildeten Kraftfahrzeug-Stellteils, bevorzugt für ein verstellbares Dachteil eines Schiebdaches, eines Hubdaches, eines Schiebe-Ausstelldaches oder ein Sonnenrollos. Gerade Fahrzeugdächer sind großen mechanischen Außeneinflüssen, wie Vibrationen ausgesetzt. Aufgrund dieser Schwingungen wird das verstellbare Dachteil sehr häufig aus einer einmal angefahrenen Position bzw. aus dem Toleranzbereich herausbewegt.

Gegenstand der Erfindung ist auch ein Verfahren zum Ansteuern eines elektromotorischen Antriebs für ein Kraftfahrzeug-Stellteil, insbesondere ein Fahrzeugdachteil, bei dem die tatsächliche Anhalteposition des Kraftfahrzeug-Stellteils nach einem Verstellvorgang zur Berechnung der absoluten Grenzen eines Toleranzbereichs herangezogen wird. Die Anhalteposition bildet die Basis (Berechnungsgrundlage) zur Ermittlung des Toleranzbereichs.

Sämtliche vorrichtungsgemäß offenbarten Merkmale der Erfindung sollen auch als verfahrensgemäß offenbart gelten und umgekehrt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: einen elektromotorischen Antrieb zum Verstellen eines als Fahrzeugdachteil ausgebildeten Fahr- zeug-Stellteils und
- Fig. 2:: eine alternative Ausführung mit zwei einer Soll- Position zugeordneten Zielpositionen.

### Ausführungsformen der Erfindung

In den Figuren sind gleiche Bauteile und Bauteile mit der gleichen Funktion mit den gleichen Bezugszeichen gekennzeichnet.

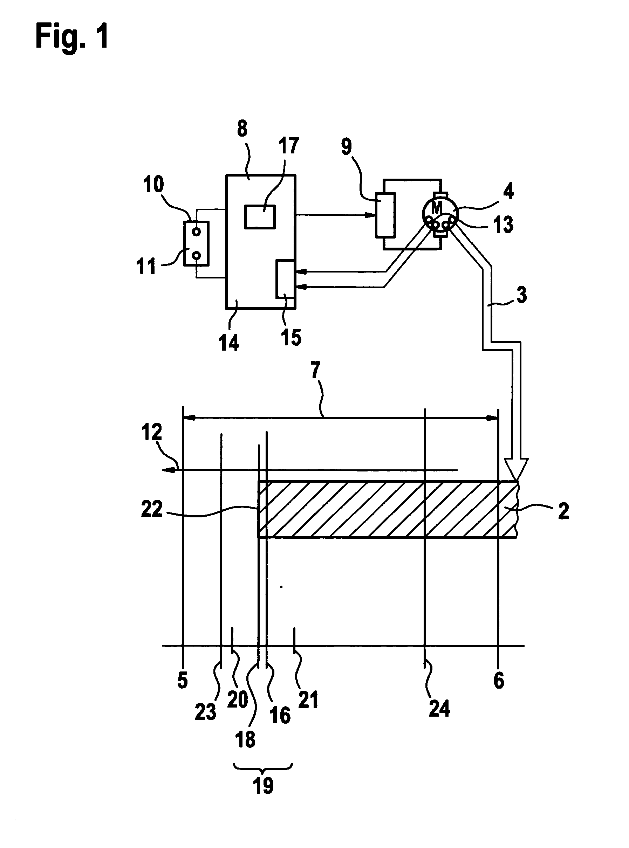

In Fig. 1 ist ein elektromotorischer Antrieb 1 für ein als Schiebedachteil ausgebildetes Kraftfahrzeug-Stellteil 2 dargestellt. Dabei symbolisiert ein Pfeil 3 die mechanische Kopplung eines Antriebsmotors 4 mit dem Kraftfahrzeug-Stellteil 2, insbesondere unter Zwischenschaltung eines nicht gezeigten Getriebes.

Mittels des Antriebsmotors 4 ist das Kraftfahrzeug-Stellteil 2 zwischen zwei Endlagen 5, 6 verstellbar, wobei der Pfeil 7 den maximalen Verstellbereich kennzeichnet. Der Antrieb 1 weist eine signalverarbeitende Anordnung 8 auf, die den Antrieb über eine Motortreiberschaltung 9 regelt oder steuert. Eine Bedienvorrichtung 10 in Form eines um eine neutrale Mittelstellung in zwei Richtungen schaltbaren Kippschalters 11 überträgt. Stellbefehle einer Bedienperson an die signalverarbeitende Anordnung 8. Die eine Schaltrichtung des Kippschalters 11 löst eine Bewegung des Kraftfahrzeug-Stellteils 2 in Richtung 12, also in Richtung der Endlage 5 aus, die andere Schaltrichtung löst eine Bewegung entgegen der Richtung 12, also in Richtung der Endlage 6. Teil von der signalverarbeitenden Anordnung 6 ist eine Detektionseinrichtung 14 mit zwei als Hall-Sensoren ausgebildete Magnetfeldsensoren 13, die in dem als Elektromotor ausgebildeten Antriebsmotor 4 des Antriebs 1 angeordnet sind. Die Magnetfeldsensoren 13 wirken mit einem Magnetring auf der Ankerwelle des Antriebsmotors als Drehsensoren zusammen. Ihre Sensorsignale werden von der Detektionseinrichtung 14 bzw. der signalverarbeitenden Anordnung 8 über eine Schnittstelle 15 zur Bestimmung der Drehzahl, der Drehrichtung und anderen Bewegungsgrößen des Antriebsmotors 4 ausgewertet. Aus diesen Daten bestimmt die Detektionseinrichtung 14 bzw. die signalverarbeitende Anordnung 8 die gegenwärtige Position des Kraftfahrzeug-Stellteils 2, insbesondere die Anhalteposition 18, d.h. die tatsächliche Ist-Position nach dem Verstellen des Kraftfahrzeug-Stellteils 2.

Der elektromotorische Antrieb 1 arbeitet folgendermaßen: Eine Bedienperson fordert eine Verstellung des Kraftfahrzeug-Stellteils 2 über eine Betätigung des Kippschalters 11 an. Die signalverarbeitende Anordnung 8 setzt den Antriebsmotor 4 über die Motortreiberschaltung 9, beispielsweise ausgehend von der in der Zeichnungsebene rechten Endlage 6 in Richtung einer ersten definierten Zielposition 16 (Zwischenposition) in Bewegung. Während der Bewegung des Kraftfahrzeug-Stellteils 2 liest die Detektionseinrichtung 14 die im Antriebsmotor 4 generierten Hall-Sensorsignale über die Schnittstelle 15 ein und ermittelt aus den inkrementellen Hall-Sensorsignalen die gegenwärtige Position des Stellteils. Die angesteuerte erste Zielposition 16, die eine Soll-Position für das Kraftfahrzeug-Stellteil 2 darstellt, ist in Tabellen in einem Speicher 17 der signalverarbeitenden Anordnung 8 niedergelegt. Wird von der signalverarbeitenden Anordnung 8 erkannt, dass die Zielposition 16 erreicht ist, so wird der Antriebsmotor 4 und somit das Kraftfahrzeug-Stellteil 2 angehalten. Toleranzbedingt weicht die tatsächliche Anhalteposition 18 von der Zielposition 16 ab. Häufig tritt eine solche Abweichung aufgrund von Schwingungen auf. Auf Basis der Anhalteposition 18, die über die Hall-Sensoren 13 von der Detektionseinrichtung 14 bzw. der signalverarbeitenden Anordnung 8 ermittelt wird, wird ein Toleranzbereich 19 von der signalverarbeitenden Anordnung 8 festgelegt. Das heißt, es werden eine absolute untere Grenze 20 und eine absolute obere Grenze 21 von der signalverarbeitenden Anordnung 8, insbesondere subtrahieren oder addieren eines Wertes von bzw. zu der tatsächlichen Anhalteposition 18 ermittelt. Insbesondere solange sich ein Bezugspunkt 22, der in diesem Ausführungsbeispiel von einer Vorderkante des Kraftfahrzeug-Stellteils 2 gebildet wird, innerhalb des Toleranzbereichs 19, also innerhalb der Grenzen 20, 21 befindet, wird von der signalverarbeitenden Anordnung 8 eine Betätigung des Elektromotors 4 verhindert, für den Fall, dass die Bedienperson mittels der Bedienvorrichtung 10 die erste Zielposition 16 erneut auswählt. Ausschließlich in dem Fall, indem der Bezugspunkt 22, insbesondere aufgrund von Vibrationen aus dem Toleranzbereich 19 herausbewegt wurde, d.h. sich nicht mehr im Toleranzbereich 19 befindet, bewirkt eine entsprechende Ansteuerung der Bedienvorrichtung 10 durch die Bedienperson, dass der Antriebsmotor 4 derart angesteuert wird, dass das Kraftfahrzeug-Stellteil 2 erneut in Richtung der ersten Zielposition 16 verstellt wird. Nach erfolgtem Verstellvorgang wird die aktuelle, tatsächliche Anhalteposition erneut detektiert und auf deren Basis ein Toleranzbereich mit i. d. R. abweichenden absoluten Grenzen berechnet.

Neben der ersten Zielposition 16 ist von dem Kraftfahrzeug-Stellteil 2 eine weitere, zweite Zielposition 23 und eine dritte Zielposition 24, eine sogenannte Antiwummerposition anfahrbar. Die Endpositionen 5, 6 werden bevorzugt durch harte Anschläge realisiert, was jedoch bei Fahrzeugdächern häufig nicht möglich ist.

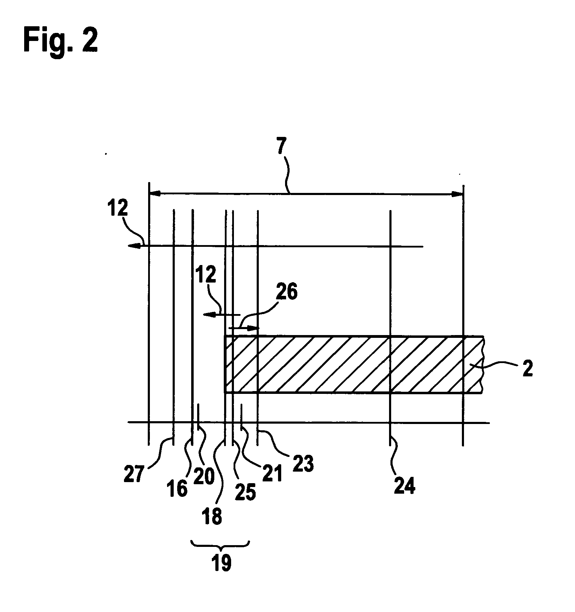

In Fig. 2 wurde aus Übersichtlichkeitsgründen auf die Darstellung der Bedienvorrichtung 10 der signalverarbeitenden Anordnung 8, der Motortreiberschaltung 9 und des Antriebsmotors 4 verzichtet. Diese Bauelemente können beispielsweise wie in Fig. 1 erläutert ausgebildet sein.

Bei dem Ausführungsbeispiel gemäß Fig. 2 sind einer Soll-Position 25 eine erste Zielposition 16 und eine zweite Zielposition 23 zugeordnet. Diese beiden in einem Speicher abgelegten Zielpositionen 16, 23 sind ausschließlich alternativ wirksam, je nachdem aus welcher Richtung das Kraftfahrzeug-Stellteil 2 die gewünschte Soll-Position anfahren soll. Wird das Kraftfahrzeug-Stellteil 2 in Richtung 12 verstellt, so ist beispielsweise die erste Zielposition 16 wirksam. Wird von der Detektionseinrichtung 14 erkannt, dass die erste Zielposition 16 erreicht ist, wird das Kraftfahrzeug-Stellteil 2 gestoppt. Die tatsächliche Anhalteposition 18 wird ermittelt und auf Basis dieser Anhalteposition 18 werden dann die untere Grenze 20 und die obere Grenze 21 eines Toleranzbereichs 19 festgelegt. Nur wenn sich das Kraftfahrzeug-Stellteil 2 wieder außerhalb dieses Toleranzbereichs 19 befindet, kann die erste Zielposition 16 bzw. die Sollposition 25 erneut aktiv angefahren werden. Aus dem Ausführungsbeispiel gemäß Fig. 2 wird besonders deutlich, wie vorteilhaft sich die Bildung des Toleranzbereiches 19 um die tatsächliche Anhalteposition 18 herum auswirkt. Ein Toleranzbereich um beide Zielpositionen 16, 23 herum wäre viel größer und würde für die Bedienperson störend sein, da in einem spürbar größeren Bereich kein erneutes Anfahren der Soll-Position 25 bzw. der ersten oder der zweiten Zielposition 16, 23 möglich wäre.

Die zweite Zielposition 23 ist an Stelle der Zielposition 16 aktiv, wenn das Kraftfahrzeug-Stellteil 2 in Pfeilrichtung 26 verstellt wird.

Neben den beiden Zielpositionen 16, 23 ist eine dritte Zielposition 24 (Antiwummer-Position) sowie eine vierte Zielposition 27 anfahrbar.

## Patentansprüche

1. Elektromotorischer Antrieb für ein in mindestens eine definierte Zielposition (16) verstellbares Kraftfahrzeug-Stellteil, mit einer Detektionseinrichtung (14) zum Erkennen, ob sich das Kraftfahrzeug-Stellteil (2) in einem Toleranzbereich (19) befindet,
**dadurch gekennzeichnet,**
**dass** der Toleranzbereich (19) in Abhängigkeit der Anhalteposition (18) des Kraftfahrzeug-Stellteils (2) bestimmbar ist.

2. Elektromotorischer Antrieb nach Anspruch 1,
**dadurch gekennzeichnet,**
**dass** selbst nach einer entsprechenden Vorgabe einer Bedienperson die Zielposition (16) nicht erneut anfahrbar ist, solange sich das Kraftfahrzeug-Stellteil (2) im Toleranzbereich (19) befindet.

3. Elektromotorischer Antrieb nach einem der Ansprüche 1 oder 2,
**dadurch gekennzeichnet,**
**dass** die Zielposition (16) automatisch anfahrbar ist, wenn das Kraftfahrzeug-Stellteil (2) den Toleranzbereich (19) aufgrund äußerer Einfluss verlassen hat.

4. Elektromotorischer Anrieb nach einem der Ansprüche 1 oder 2,
**dadurch gekennzeichnet,**
**dass** die Zielposition (16) nach einer entsprechenden Vorgabe einer Bedienperson anfahrbar ist, wenn das Kraftfahrzeug-Stellteil (2) den Toleranzbereich (9) verlassen hat.

5. Elektromotorischer Antrieb nach einem der vorhergehenden Ansprüche,
**dadurch gekennzeichnet,**
**dass** der Toleranzbereich (19) parametrierbar ist

6. Elektromotorischer Antrieb nach einem der vorhergehenden Ansprüche,
**dadurch gekennzeichnet,**
**dass** die Detektionseinrichtung (14) mindestens einen Magnetfeldsensor (13), insbesondere einen Hall-Sensor, und ein relativ zu dem Magnetfeldsensor verdrehbar angeordneter Magnetring mit einer magnetischen Teilung umfast.

7. Elektromotorischer Antrieb nach einem der vorhergehenden Ansprüche,
**dadurch gekennzeichnet,**
**dass** in Abhängigkeit der Verstellrichtung, vorzugsweise geringfügig, voneinander abweichende Zielpositionen (16) anfahrbar sind.

8. Elektromotorischer Antrieb nach einem der vorhergehenden Ansprüche,
**dadurch gekennzeichnet,**
**dass** das Kraftfahrzeug-Stellteil (2) zwischen zwei Endpositionen (5, 6) verstellbar ist.

9. Elektromotorischer Antrieb nach Anspruch 8,
**dadurch gekennzeichnet,**
**dass** die Zielposition (16) von einer Endposition (5, 6) oder einer zwischen den Endpositionen liegenden Position gebildet ist.

10. Elektromotorischer Antrieb nach einem der vorhergehenden Ansprüche,
**dadurch gekennzeichnet,**
**dass** das Kraftfahrzeug-Stellteil (2) ein Fahrtzeugdachteil, insbesondere eines Schiebedaches, ist.

11. Verfahren zum Ansteuern eines elektromotorischen Antriebs (1) für ein Kraftfahrzeug-Stellteil (2), mit dem mindestens eine definierte Zielposition (16) des Kraftfahrzeug-Stellteil (2) angesteuert wird, und bei dem detektiert wird, ob sich das Kraftfahrzeug-Stellteil (2) in einem Toleranzbereich (19) befindet,
**dadurch gekennzeichnet,**
**dass** der Toleranzbereich (19) in Abhängigkeit der Anhalteposition (18) des Kraftfahrzeug-Stellteils (2) bestimmt wird.

## Claims

1. Electromotive drive for a motor-vehicle actuating part which can be adjusted to at least one defined target position (16), having a detection device (14) for identifying whether the motor-vehicle actuating part (2) is in a tolerance range (19),
**characterized**
**in that** the tolerance range (19) can be determined as a function of the stopping position (18) of the motor-vehicle actuating part (2).

2. Electromotive drive according to Claim 1,
**characterized**
**in that,** even after a corresponding prespecification by an operator, the target position (16) cannot be approached again as long as the motor-vehicle actuating part (2) is in the tolerance range (19).

3. Electromotive drive according to either of Claims 1 and 2,
**characterized**
**in that** the target position (16) can be automatically approached when the motor-vehicle actuating part (2) has left the tolerance range (19) on account of external influences.

4. Electromotive drive according to either of Claims 1 and 2,
**characterized**
**in that** the target position (16) can be approached after a corresponding prespecification by an operator when the motor-vehicle actuating part (2) has left the tolerance range (19).

5. Electromotive drive according to one of the preceding claims,
**characterized**
**in that** the tolerance range (19) can be parameterized.

6. Electromotive drive according to one of the preceding claims,
**characterized**
**in that** the detection device (14) comprises at least one magnetic field sensor (13), in particular a Hall sensor, and a magnet ring which is arranged such that it can be turned relative to the magnetic field sensor and has a magnetic pitch.

7. Electromotive drive according to one of the preceding claims,
**characterized**
**in that** target positions (16) which deviate, preferably slightly, from one another can be approached as a function of the adjustment direction.

8. Electromotive drive according to one of the preceding claims,
**characterized**
**in that** the motor-vehicle actuating part (2) can be adjusted between two end positions (5, 6).

9. Electromotive drive according to Claim 8,
**characterized**
**in that** the target position (16) is formed by an end position (5, 6) or a position which is situated between the end positions.

10. Electromotive drive according to one of the preceding claims,
**characterized**
**in that** the motor-vehicle actuating part (2) is a motor-vehicle roof part, in particular a sliding roof.

11. Method for activating an electromotive drive (1) for a motor-vehicle actuating part (2), with which method at least one defined target position (16) of the motor-vehicle actuating part (2) is set, and in which method a detection operation is carried out to determine whether the motor-vehicle actuating part (2) is in a tolerance range (19),
**characterized**
**in that** the tolerance range (19) is determined as a function of the stopping position (18) of the motor-vehicle actuating part (2).

## Revendications

1. Entraînement par moteur électrique pour une pièce de commande d'un véhicule automobile déplaçable dans au moins une position cible définie (16), comprenant un dispositif de détection (14) pour détecter si la pièce de commande (2) du véhicule automobile se trouve dans une plage de tolérances (19),
**caractérisé en ce que**
la plage de tolérances (19) peut être déterminée en fonction de la position d'arrêt (18) de la pièce de commande (2) du véhicule automobile.

2. Entraînement par moteur électrique selon la revendication 1,
**caractérisé en ce que**
même après un ordre préalable correspondant d'un opérateur, la position cible (16) ne peut pas être à nouveau atteinte tant que la pièce de commande (2) du véhicule automobile se trouve dans la plage de tolérances (19).

3. Entraînement par moteur électrique selon l'une quelconque des revendications 1 ou 2,
**caractérisé en ce que**
la position cible (16) peut être automatiquement atteinte quand la pièce de commande (2) du véhicule automobile a quitté la plage de tolérances (19) du fait d'une influence extérieure.

4. Entraînement par moteur électrique selon l'une quelconque des revendications 1 ou 2,
**caractérisé en ce que**
la position cible (16) peut être atteinte en fonction d'un ordre préalable de l'opérateur, quand la pièce de commande (2) du véhicule automobile a quitté la plage de tolérances (19).

5. Entraînement par moteur électrique selon l'une quelconque des revendications précédentes,
**caractérisé en ce que**
la plage de tolérances (19) peut être paramétrée.

6. Entraînement par moteur électrique selon l'une quelconque des revendications précédentes,
**caractérisé en ce que**
le dispositif de détection (14) comprend au moins un capteur de champ magnétique (13), notamment un capteur de Hall, et une bague magnétique disposée de manière rotative par rapport au capteur de champ magnétique, avec une division magnétique.

7. Entraînement par moteur électrique selon l'une quelconque des revendications précédentes,
**caractérisé en ce que**
des positions cibles (16) s'écartant les unes des autres, de préférence légèrement, peuvent être atteintes en fonction du sens de déplacement.

8. Entraînement par moteur électrique selon l'une quelconque des revendications précédentes,
**caractérisé en ce que**
la pièce de commande (2) du véhicule automobile peut être déplacée entre deux positions de fin de course (5, 6).

9. Entraînement par moteur électrique selon la revendication 8,
**caractérisé en ce que**
la position cible (16) est formée par une position de fin de course (5, 6) ou une position située entre les positions de fin de course.

10. Entraînement par moteur électrique selon l'une quelconque des revendications précédentes,
**caractérisé en ce que**
la pièce de commande (2) du véhicule automobile est une partie de toit de véhicule, notamment un toit ouvrant.

11. Procédé pour commander un entraînement par moteur électrique (1) pour une pièce de commande (2) d'un véhicule automobile, avec lequel au moins une position cible définie (16) de la pièce de commande (2) du véhicule automobile est fixée, et dans lequel on détecte si la pièce de commande (2) du véhicule automobile se trouve dans une plage de tolérances (19),
**caractérisé en ce que**
la plage de tolérances (19) est déterminée en fonction de la position d'arrêt (18) de la pièce de commande (2) du véhicule automobile.
